# EUROPEAN PATENT APPLICATION

(11) **EP 1 722 147 A2**
(43) Date of publication of application: **15.11.2006**
(21) Application number: 06252410.3
(22) Date of filing: 05.05.2006
(51) Int. Cl.: F16L 55/175

(54) **Method and apparatus for sealing fluid carrying members**

(30) Priority: 05.05.2005 GB 0509143
(71) Applicant: M.W. Polymer Products Limited, Little Eaton, Derby DE21 5DS (GB)
(72) Inventor: Wild, Michael David c/o M W Polymer Products Ltd, Little Eaton Derbyshire DE21 5DS (GB)
(74) Representative: Lock, Howard John

(57) **Abstract**

A method of sealing a leak in a fluid carrying member, the method comprising applying a leak covering arrangement to the fluid carrying member to cover the leak, so that the leak covering arrangement defines a space between the fluid carrying member and the leak covering member, securing the leak covering member to the fluid carrying member, supplying a curable material to the said space to seal the leak, and allowing the curable material to cure.

## Description

This invention relates to methods and apparatus for sealing leaking fluid carrying members. More particularly, but not exclusively, the invention relates to methods and apparatus for sealing leaking fluid carrying members.

Pipes transmit fluids in the form of liquids or gases to factories and to our homes. These pipes come in a range of sizes and can be made of steel, plastic or iron. The pipe networks that distribute the liquids and gases are usually laid under the ground and can develop leakage through rust or electrical reactions.

In order to repair such leaks, various methods are employed, such as cutting out the leaking part of the pipe and replacing it with a new part, lining the inside of the pipes, or fitting a steel mechanically fastened clamp. The method of cutting out the pipe work is disruptive and expensive. Even though the replacement pipe section is relatively cheap, the method involves extending the flow of the liquid or gas in the pipe or providing an alternative pipe system through which the fluid can flow.

The method of lining the inside of the pipe can also involve disrupting the flow of the liquid or gas in the pipe. Also, there is a danger of the liner not fitting the exact internal dimension of the pipe. The provision of clamps to seal the leak requires different size clamps for different size pipes. Also, the clamp has to remain fitted to the pipe in order for the leak to remain sealed.

According to one aspect of this invention, there is provided a method of sealing a leak in a fluid carrying member, the method comprising applying a leak covering arrangement to the fluid carrying member to cover the leak, so that the leak covering arrangement defines a space between the fluid carrying member and the leak covering member, securing the leak covering member to the fluid carrying member, supplying a curable sealing material to the said space, and allowing the curable material to cure.

In one embodiment, the method may comprise removing the leak covering arrangement after the curable material has cured. In another embodiment, the method may comprise leaving the leak covering arrangement in place after the curable material has cured.

According to another aspect of this invention, there is provided a leak covering arrangement to cover a leak in a fluid carrying member, the leak covering arrangement comprising a main portion to cover the leak and securing means to releasably secure the main portion to the fluid carrying member, wherein the securing means is adapted to allow the securing means to secure the main portion to different fluid carrying member.

The fluid carrying member is preferably a pipe, such as a water or a gas pipe. The method may comprise applying preliminary sealing means to stem the flow of the leaking fluid. The preliminary sealing means may comprise a stopper insertable into the leak to seal the leak at least partially,

The leak covering arrangement preferably includes a main portion and may further include a flexible securing means. The step of securing the leak covering arrangement to the fluid holding arrangement may comprise tightening the flexible securing means against the fluid carrying member. The flexible securing means may comprise a flexible securing member and tightening means to tighten the flexible securing member. The flexible securing member is preferably fixedly attached to the tightening means at one region of the main portion. The flexible securing member may be manipulable to cooperate with a cooperating member at another region of the main portion, whereby the securing member extends around the fluid carrying member.

After the stage of securing the leak covering member to the fluid carrying member, the method may comprise achieving a substantially equal pressure in the fluid carrying member and the space.

The tightening means may comprise a threaded member to which the flexible securing member may be fixedly attached. The tightening means may include a receiving element to receive the threaded member. The receiving element is preferably mounted on the main portion. Preferably, the tightening means includes a correspondingly threaded part to threadably engage the threaded member. The threaded part may apply a reaction force against the receiving element to tighten the threaded member. The threaded part may comprise a nut.

The flexible securing member may comprise a chain, such as a bicycle chain. Alternatively, the flexible securing member may comprise a strap, such as a metal strap, which may be formed of steel. The cooperating member may include projecting portions onto which the flexible securing member can mesh,

Preferably, the flexible securing member is fixedly attached to the tightening means at one side of the main portion. The cooperating member is preferably provided at the opposite side of the main portion.

The leak covering arrangement may comprise a plurality of securing means, for example a pair of securing means, which may be arranged side by side on the main portion.

Preferably, the leak covering arrangement comprises two or more of the aforesaid securing means which may be arranged side by side on the main portion.

The main portion may define a supply aperture and a bleed aperture. The supply aperture and the bleed aperture may be defined in the main portion.

Preferably, the main portion defines a plurality of apertures, each of which may act as a bleed aperture or a supply aperture.

The main portion preferably comprises a plurality of conduits extending to respective bleed or supply apertures. The conduits may comprises closing means to close the conduits after the curable member has been said space. The conduits may comprise connecting elements to connect the conduits to the supply or bleed tubes.

The main portion may be deformable to allow its shape to conform to the shape of the fluid carrying member. Preferably, the main portion is formed of a plastic or a metallic material. The main portion may comprise a plate. Preferably, a space is defined by the main portion to receive a sealing material.

The main portion may include a gasket member to define the aforesaid space and to engage the fluid holding member to prevent leakage of the sealing material. The gasket may comprise a rubber member extending around the edge region of the main portion. The sealing material may comprise a curable fluid.

In one embodiment, the leak covering arrangement comprises a manipulating assembly to manipulate the main portion.

The manipulating assembly may comprise a first manipulating member to engage the main portion and to arrange the main portion on the fluid holding member. The first manipulating member may comprise a elongate member.

The manipulating assembly preferably includes an engagement member to engage the main portion and to enable the main portion to be manipulated onto the fluid carrying member. The engagement member is an elongate member.

The engagement member may be connectable to the main portion preferably at one of the aforesaid connecting elements. More preferably, the engagement member is connectable to the main portion at the central connecting element.

The manipulating assembly may further include a control arrangement for controlling the securing means. Preferably, the control arrangement comprises a handle and a pivoting portion pivotally mounted on the handle. The handle may be elongate.

The manipulating assembly may include a support member to support the handle. Preferably, the support member defines an aperture through which the handle extends. Preferably, the support member is mounted on the engagement member to provide the aforesaid support for the control arrangement.

The pivoting portion may be curved to allow it to pass under the fluid carrying member and engage the, or one of the flexible securing members. The manipulating assembly may comprise two of said pivoting portions, which may be connected to one another and to the handle,

The handle may include a main part and a connecting part. Preferably the connecting part is pivotally connected to the pivoting portion. The connecting part is preferably pivotally connected to the main part.

The method of using the embodiment preferably comprises, during the stage of applying the leak covering member to the fluid carrying member, manipulating the main portion using the engagement member, to engage the main portion onto the fluid carrying member. The step of securing the leak covering member to the fluid carrying member may comprise operating the control arrangement to pivot the, or each, pivoting portion to engage the, or each, flexible securing member and manipulate the, or each, flexible securing member into cooperation with the, or each respective, co-operating member.

The manipulating assembly may include a turning member to turn the threaded member, thereby tightening the threaded member.

The manipulating assembly may include a grab member to grab the flexible securing member and arrange it on the cooperating member. The grab member may comprise a tube housing an elongate element extending through the tube. A pair of gripping members are pivotally mounted on the end of the elongate element, whereby movement of the elongate element longitudinally within the tube moves the gripping members into engagement with the tube to move the gripping members to a gripping position, and to disengage the gripping members from the tube to allow the gripping members to move to a non-gripping position.

In another embodiment, the leak covering arrangement may comprise a holding member arrangeable between the main portion and the fluid carrying member. The holding member may comprise a deformable material, such as an elastomeric material. A suitable such deformable material may comprise an elastomeric rubber material.

A cavity may be defined within the holding member to receive the curable material. The cavity may constitute the aforesaid space.

The method may involve disposing the holding member between the main portion and the fluid carrying member.

The holding member may define an inlet port through which the curable material can be supplied to the cavity. The inlet port may be arranged to be in alignment with one of the supply conduits on the main portion when the holding member is disposed between the main portion and the fluid carrying member.

The method may comprise supplying the curable material to the cavity to deform the deformable material to seal the leak.

The flexible member may comprise a strap, such as a metal strap, preferably formed of steel. The securing means may comprise a pair of flexible members.

According to another aspect of this invention there is provided a leak sealing assembly comprising: a leak sealing arrangement as described above and having a main portion defining a space; and a dispenser for dispensing a sealing material into said space.

Embodiments of the invention will now be described by way of example only, with reference to the accompanying drawings, in which:
Figs 1 to 6 show perspective views of a leaking pipe and preliminary steps involved in one embodiment of repairing the leak, with Fig 6 showing a leak covering arrangement;
Fig 6A is a view of a section cut along the lines VI-VI in Fig 6;
Fig 7 is a perspective view of the stage after the stage shown in Fig 6 for repairing the leak;
Fig 7A is a view of a section cut along the lines VII-VII in Fig 7;
Fig 8 is a view of the next stage in the process for repairing the leak after the Fig shown in Fig 7;
Fig 8A is a view along the lines VIII-VIII in Fig 8 showing the securing means before tightening;
Fig 8B is a view of a section cut along the lines VIII-VIII in Fig 8 showing the securing means after tightening;
Fig 9 is an underside view of a leak covering arrangement, with the securing means omitted;
Fig 10 is a perspective view showing a sealant injector being connected;
Fig 10A is a view of a section cut along the lines X-X in Fig 10 showing the injector connected;
Fig 11 is an underside view of the leak covering arrangement showing the sealant;
Fig 12 is a perspective view of the stage subsequent to the stage shown in Fig 10;
Fig 12A is a view of a section cut along the lines XII-XII in Fig 12;
Fig 13 is a perspective view of the stage subsequent to the stage shown in Fig 12;
Fig 13A is a view of a section cut along the lines XIII-XIII in Fig 13;
Fig 14 is a perspective view of the stage subsequent to the stage shown in Fig 14;
Fig 14A is a view of a section cut along the lines XIV-XIV in Fig 14; and
Fig 15 is a perspective view of a repaired pipe.
Figs 16 to 20 show perspective views of a leaking pipe and preliminary steps involved in another embodiment of repairing the leak;
Fig 21 is an end view of the pipes shown in Figs 16 to 20, with another embodiment of a leak covering member being applied thereto;
Fig 21 A is a view along the lines XXI-XXI in Fig 21;
Fig 22 is an end view of the stage subsequent to the stage shown in Fig 21;
Fig 22A is a view along the lines XXII-XXII in Fig 22;
Figs 23 to 26 show the next stages in the method of sealing the leak;
Fig 27 is an end view of the stage subsequent to the stage shown in Fig 26, with a sealing material being injected;
Figs 28 to 30 show the next stages in the method;
Fig 32 shows the stage subsequent to the stage shown in Fig 31;
Fig 32A is a view along the lines XXXII-XXXII in Fig 32;
Fig 33 is a view of the stage subsequent to the stage shown in Fig 32;
Fig 33A is a view along the lines XXXIII-XXXIII in Fig 33;
Fig 34 is a perspective view of a repaired pipe;
Fig 34A is a side view of the pipe shown in Fig 34;
Fig 34B is an end view of the pipe shown in Fig 34;
Fig 35 shows a sectional side view of a further embodiment;
Fig 36 shows a view similar to Fig 35 with a curable materialsupplied thereto;
Fig 37 is a perspective view of the embodiment shown in Fig 35 applied to a fluid carrying member;
Fig 38 is a perspective partially cut away view of the holding member for use in the embodiment shown in Fig 35;
Fig 39 is a view similar to Fig 38 of another embodiment of a holding member;
Fig 40 is a perspective view showing a stage in a further embodiment of a method;
Fig 41 is a perspective view showing a stage subsequent to the stage shown in Fig 40 and
Fig 42 is a perspective view showing a stage subsequent to the stage shown in Fig 41.

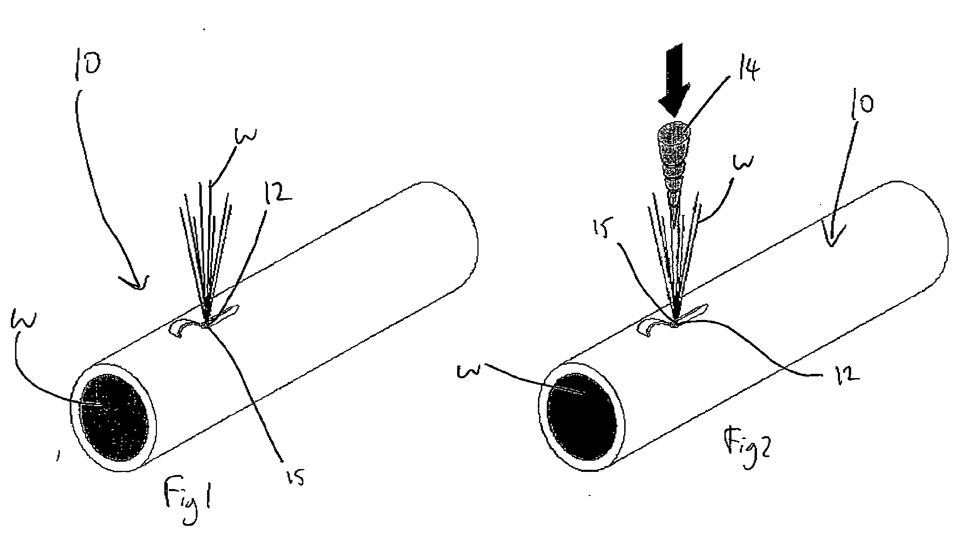

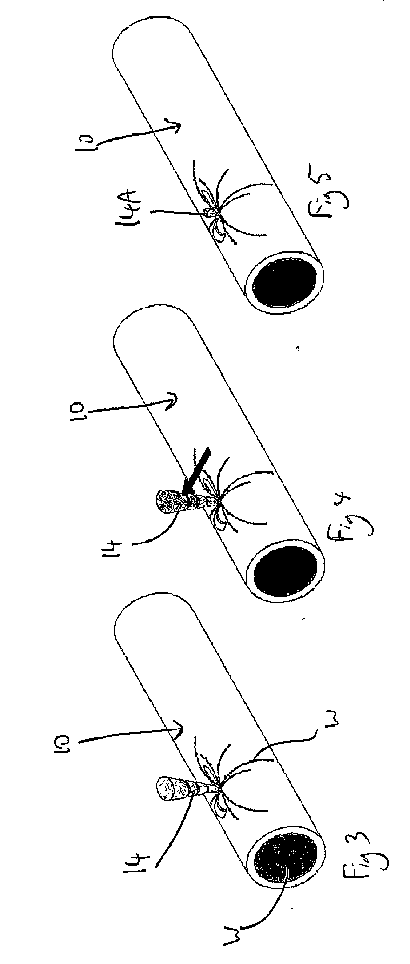

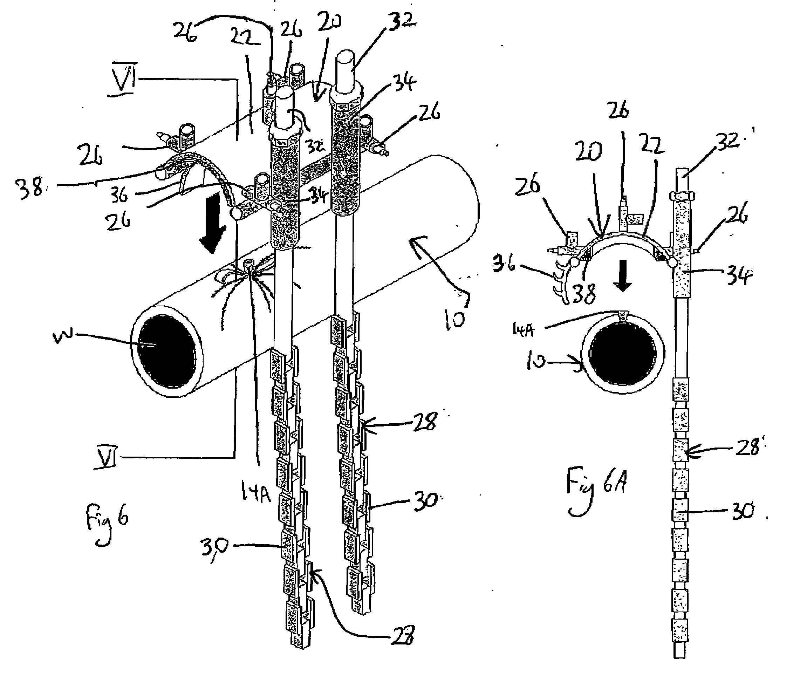

Fig 1 shows a fluid carrying member in the form of a pipe 10. The pipe 10 is carrying a fluid, which in the embodiment shown is water W. A leak 12 has formed in the pipe 10 and water 12 is leaking out via hole 15. Fig 2 shows the pipe 10 and a stopper 14 which is being used to stem the flow of water leaking from the leak 12. Fig 3 shows the stopper 14 inserted into the hole 15 forming the leak, and Figs 4 and 5 show the removal of a large proportion of the projecting region of the stopper 14 to leave a residual portion 14A.

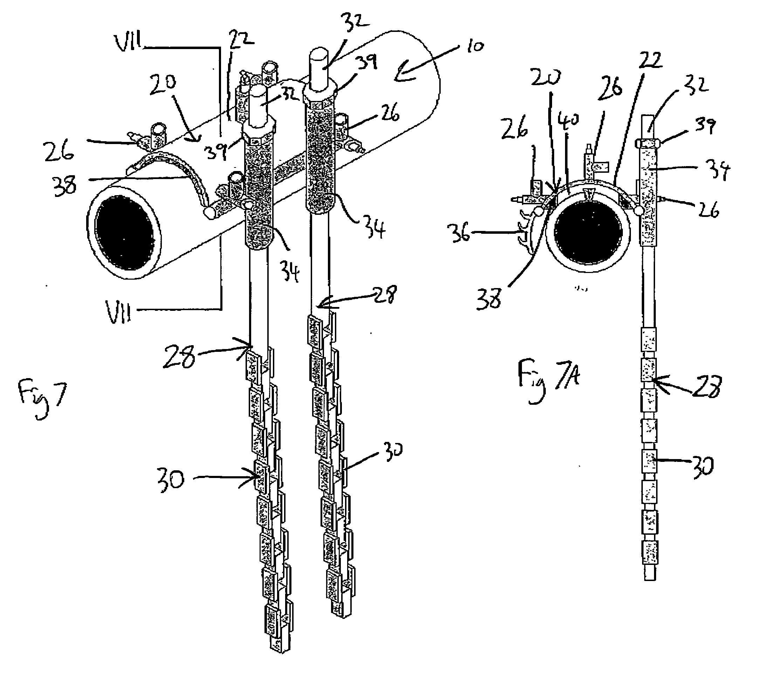

Fig 6 shows a leak covering arrangement 20 being arranged over the pipe 10 to cover the leak 12. The leak covering arrangement 20 comprises a main portion in the form of a deformable curved rectangular plate 22. The deformability of the plate 22 allows it to be deformed so that it conforms to the diameter of the pipe 10 to be repaired.

The plate 22 defines a plurality of apertures to which conduits 26 extend. Any of the conduits 26 can be used as bleed or supply conduits either to allow a curable sealing material to be supplied between the curved plate 22 and the pipe 10 or to allow the curable material supplied thereto to bleed therefrom, as described below.

The leak covering arrangement 20 also includes a pair of securing means 28 comprising a pair of flexible members in the form of chains 30 each of which is fixedly attached to a respective externally threaded elongate cylindrical members 32. Each elongate cylindrical member 32 is received within a cylindrical tube 34, Each cylindrical tube 34 is fixedly mounted to one edge of the plate 22. On the opposite edge of the plate are provided a pair of projecting formations 36 with which the respective chains 30 can mesh as described below.

A threaded nut 39 is threadably received on each threaded elongate member 32 to adjust the position of each elongate member 32 within its respective tube 34 to tighten or loosen the chains 30, as described below.

A rectangular curved gasket 38 is provided on the underside of the curved plate 22 to seal the curved plate 22 against the pipe 10 to prevent any leakage of the curable sealing material therefrom.

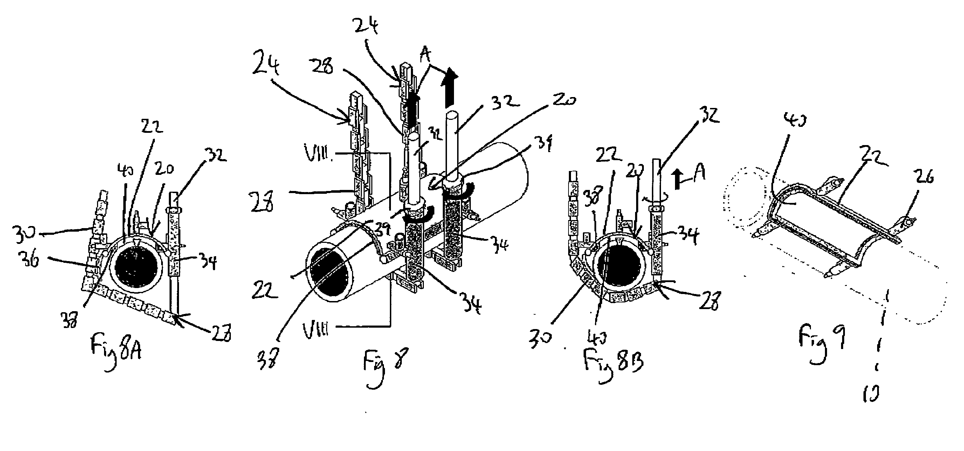

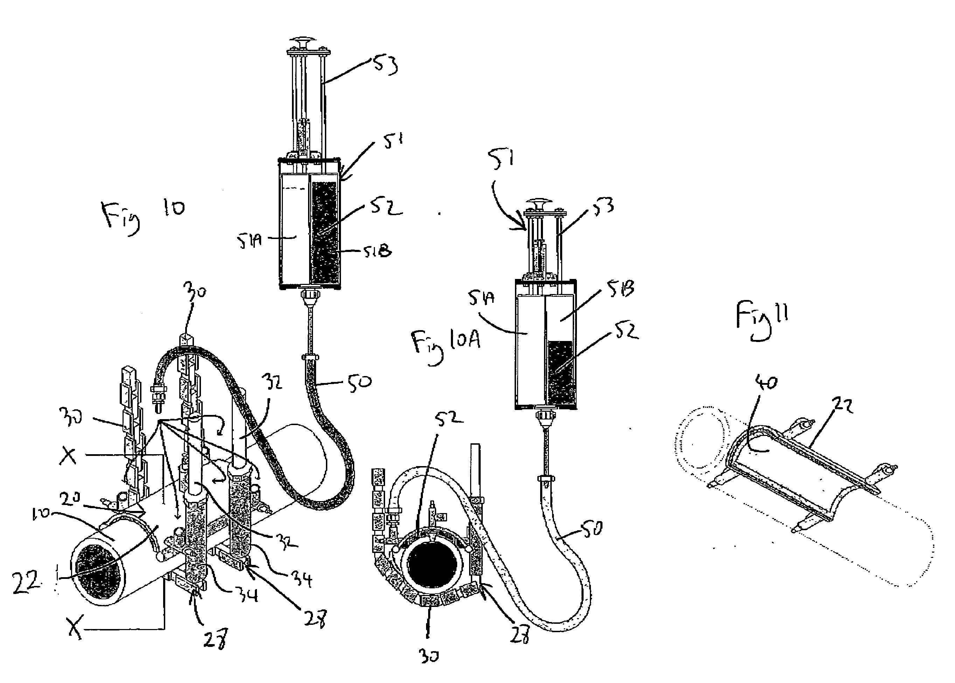

As shown in Figs 7 and 7A, the curved plate 22 of the leak covering arrangement 20 engages the pipe 10 such that a space 40 is defined between the curved plate 22 and the pipe 10. The space 40 is sealed by the gasket 38. The chains 30 are then moved into meshing engagement with the respective projections 36, as shown in Fig 8, and the nuts 39 are tightened on the cylindrical members 32 to move the cylindrical members 32 in the direction of the arrows A thereby tightening the chains 30 against the underside of the pipe 10 as shown in Fig 8B and pulling the curved plate 22 down against the pipe 10. Fig 9 shows the underside of the curved plate 22 in which the space 40 between the curved plate 22 and the pipe 10 can be seen.

The next stage of the process is the connection of a supply tube 50 to one of the conduits 26. The supply tube 50 is connected to a dispenser 51 holding a curable material 52. When the supply tube 50 has been so connected, as shown in Fig 10A the curable material 52 is injected into the space 40 via the conduit 26 to which the supply tube 50 apparatus has been connected. The dispenser 51 shown in Figs 10 and 10A is a standard dispenser 51 as would be known in the art and comprises twin injection chambers 51 A, 51 B, one chamber 51 A being filled with the sealing material, and the other chamber 51 B being filled with a curing agent. By pressing down on a plunger 53, the sealing material and the curing material are mixed together and the mixture is injected into the space 40. When the sealing mixture bleeds from the other conduit 26, the operator knows that the space 40 is filled with the sealing mixture. It is preferred that the operator injects the sealing material into the space 40 at the lowest point.

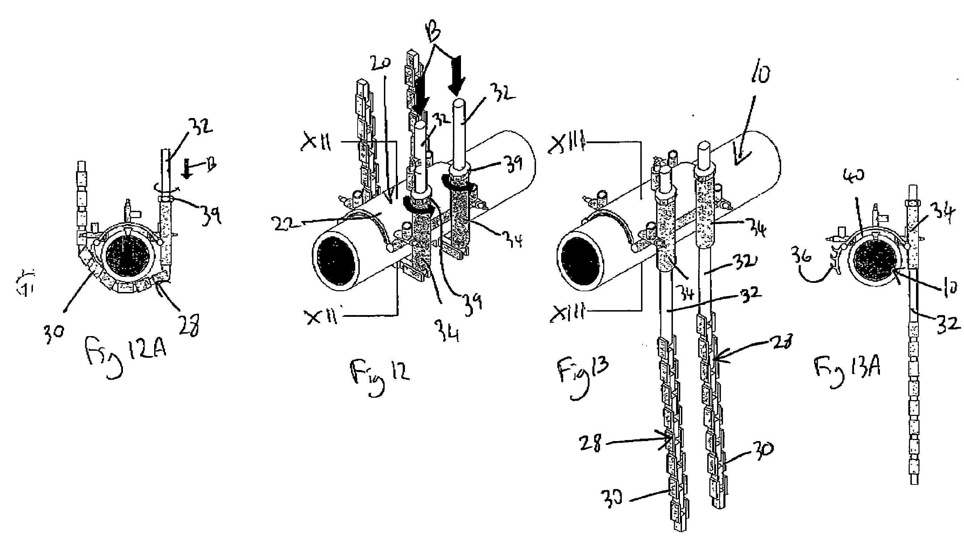

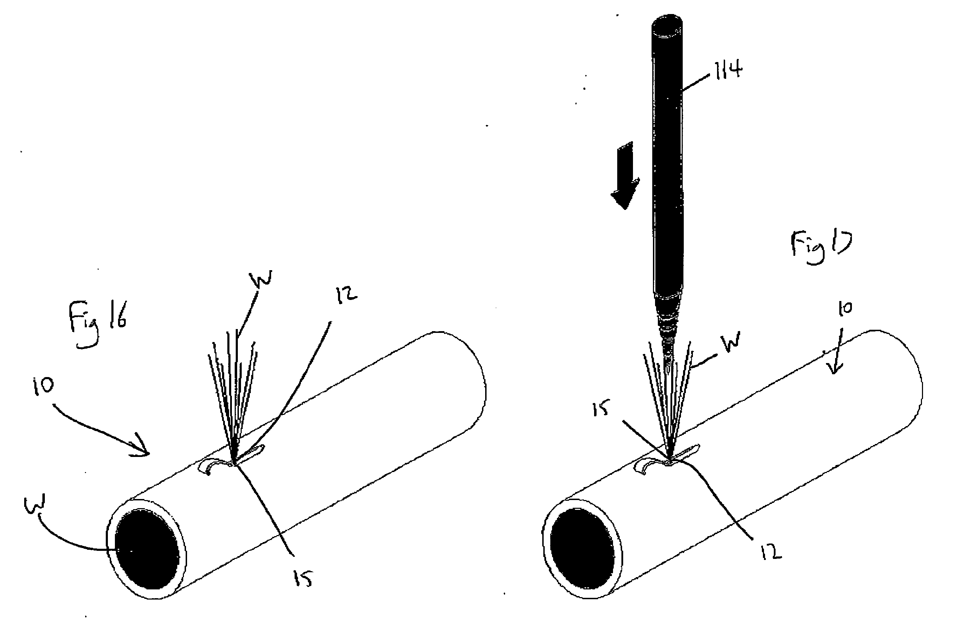

Fig 11 shows the curved plate 22 and the mixture which has been injected into the space 40. The leak covering arrangement 20 is then left in this position to allow the sealing material to cure in the space 40. After curing, nuts 39 on the cylindrical members 32 are unscrewed to move the cylindrical members 32 downwardly, as shown by the arrows B to loosen the chains 30 and allow the chains 30 to be removed from the projecting portions 36. The covering arrangement 20 can be removed, as shown in Figs 14 and 14A to leave a pad 54 of the cured sealing material affixed to the pipe 10 sealing the leak 12, as shown in Fig 15.

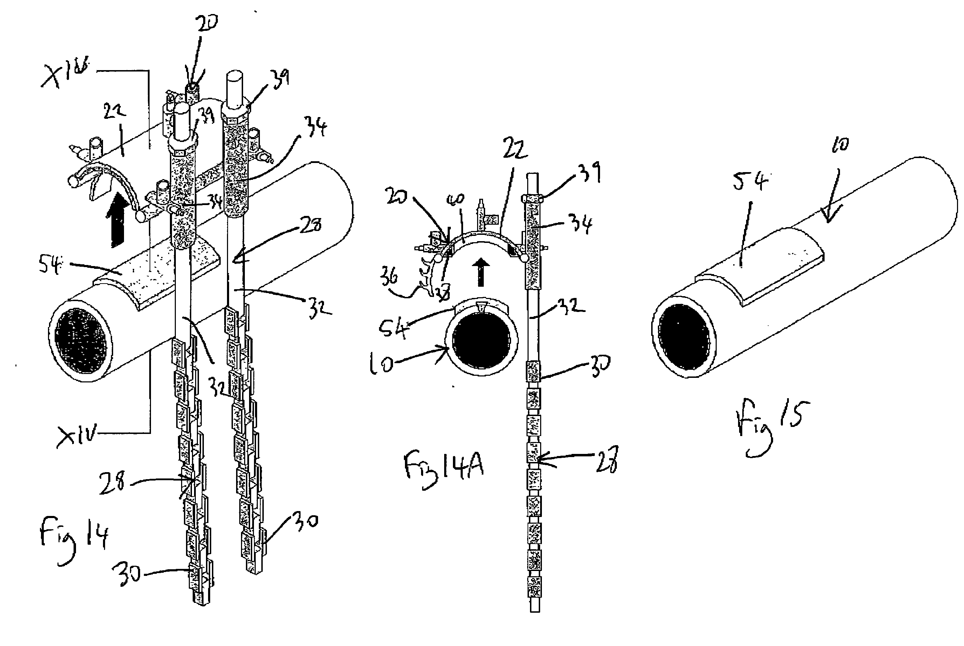

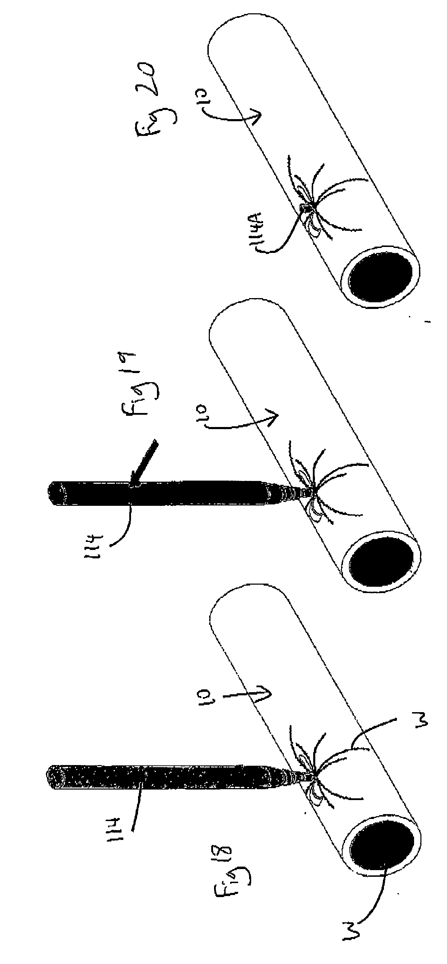

Fig 16 to 34B show another embodiment of a method of sealing a pipe and a leak covering arrangement 20 for sealing the pipe. The steps of the method, and the features possessed by the leak covering arrangement 20 shown in Figs 16 to 33 are for the most part the same as those shown in Figs 1 to 15, and the same features have been identified with the same reference numerals. Accordingly, these features and their method of operation, will not be described again.

The embodiment shown in Figs 16 to 34B differs from the embodiment shown in Figs 1 to 15 in that the pipe 16 is arranged in a deep hole 100, and cannot easily be accessed by workmen.

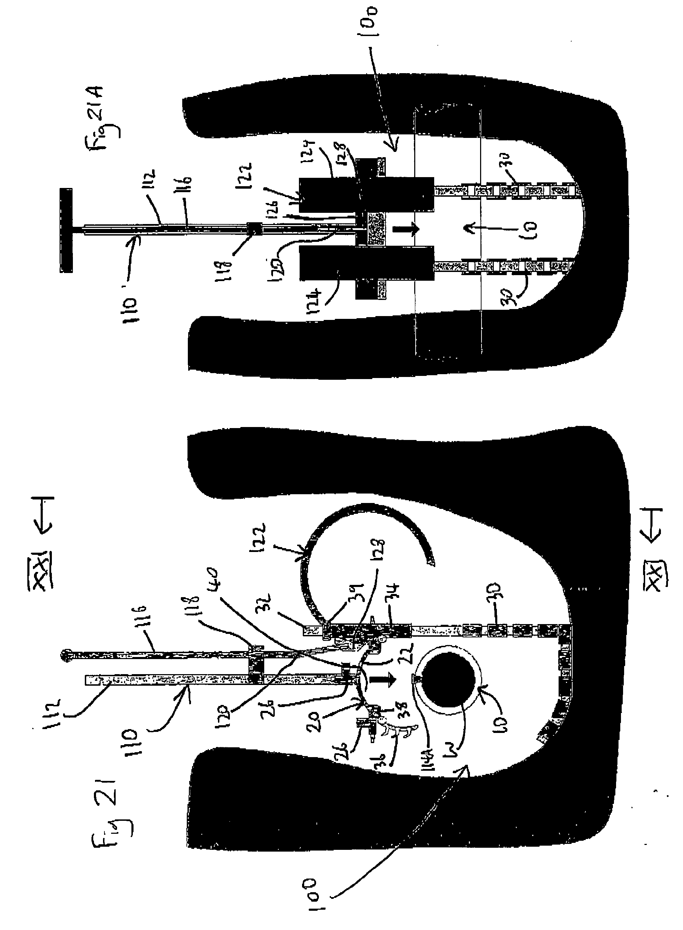

In order to solve this problem, a manipulating assembly 110 is used. Initially, an elongate stopper at 114 is inserted into the hole 15 forming the leak, and a large proportion of the stopper is removed (as shown in Fig 19) to leave a residual portion 114A as shown in Fig 20.

Referring to Figs 21 and 21 A, the manipulating assembly 110 comprises an elongate engagement portion 112 which is fitted onto the central conduit 26, as shown. The manipulating arrangement also includes an elongate handle 116 which extends through a support member 118 fixedly mounted on the engagement portion 112. The handle 116 extends to a connecting member 120 and is pivotally attached thereto. The connecting member 120 is connected at its opposite end to a pivoting portion 122. The pivoting portion 122 comprises a pair of pivoting members 124 arranged side by side and a connecting element 126 extending between the two pivoting members 124. The connecting portion 120 is pivotally attached to the connecting element 126 at a lug 128.

The engagement member 112 is used to lower the leak covering arrangement 20 onto the pipe in the region of the stopper 114A to cover the leak in a similar way to the first embodiment.

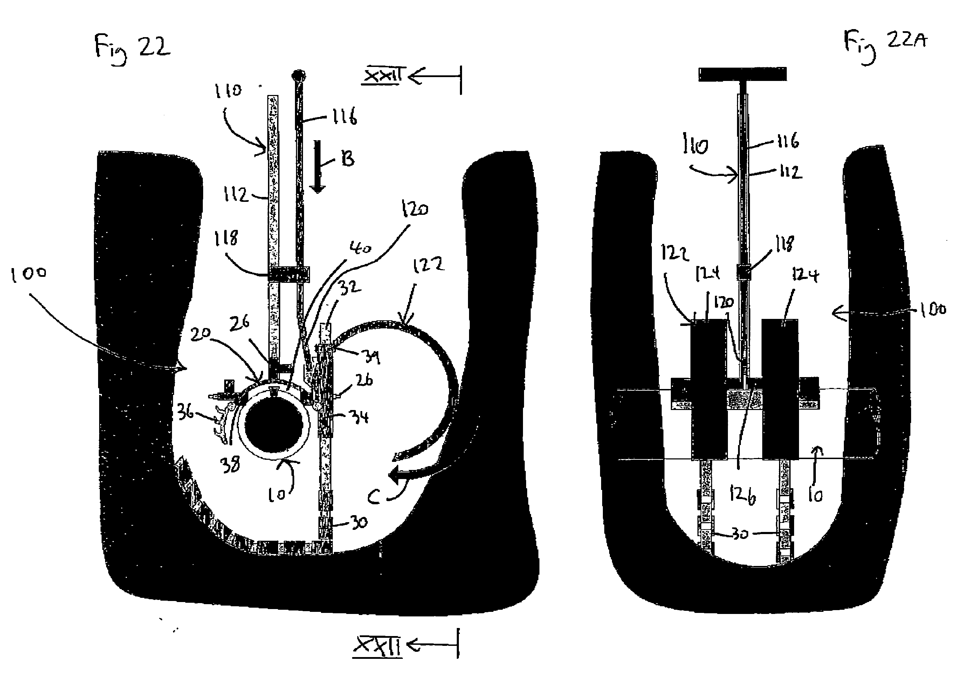

As shown, the pivoting members 124 define a part of a circle and curve outwardly from the connecting element 126. When the leak covering arrangement 20 has been arranged on the pipe, the handle 116 Is lowered, as shown by the arrow B. In view of the pivotal connection with the connecting portion 120 and the pivoting portion 122. The pivoting portion 122 moves as shown by the arrow C in Fig 22.

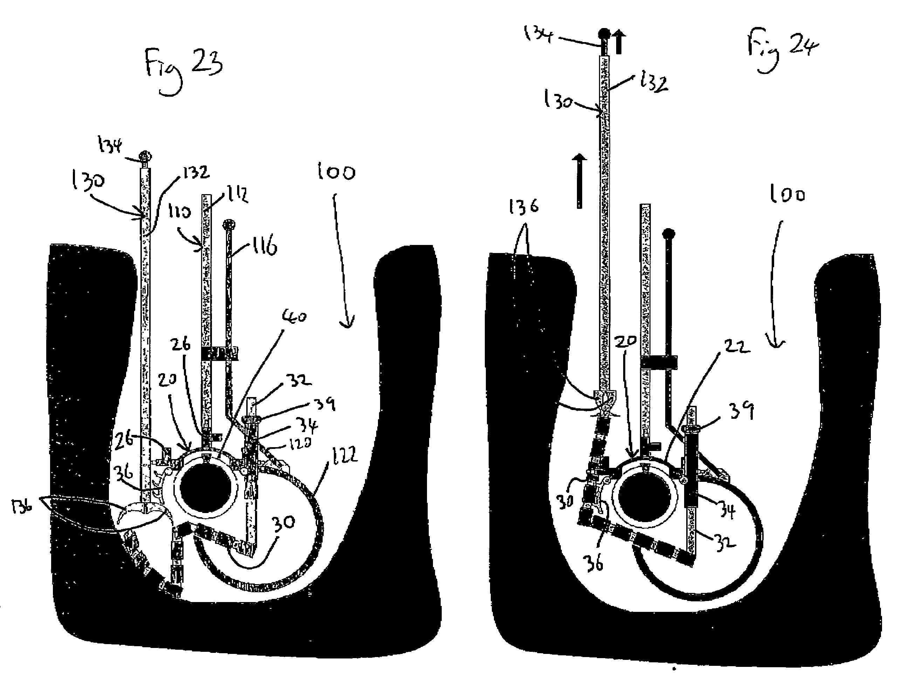

Fig 23 shows that the handle 116 moves the pivoting members 122 into engagement with the chain 30 to move some of the chain 30 upwardly. A grab member 130 is provided to grab the chain 30 and move it into engagement with the operating member 36, as shown in Figs 23 and 24.

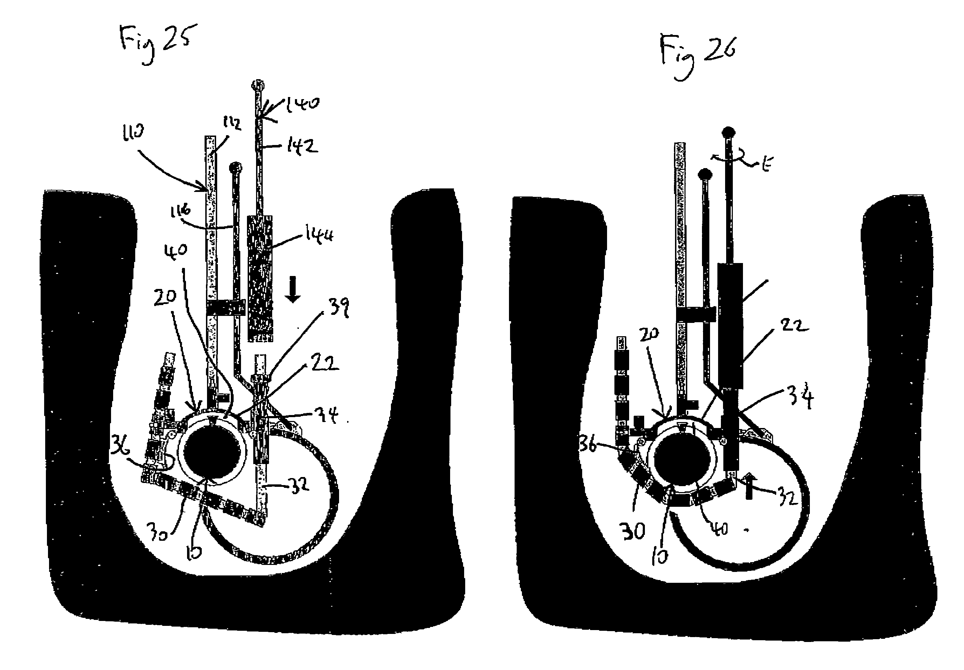

The grab member 130 comprises an elongate tube 132 which holds within it an elongate rod 134. The elongate rod 134 protrudes from opposite ends of the elongate tube 132, and at the lower end of the elongate rod 134, as shown in Figs 23 and 24, a pair of gripping members 136 are pivotally mounted on the rod 134. By pulling the rod 134 upwardly relative to the tube 132, the gripping members 136 engage the lower end of the tube 132 and are moved from an open position shown in Fig 23 to a gripping position shown in Fig 26. By appropriate manipulating the grab member 130, the gripping members can be made to grip the chain 30 which can then be lifted to engage the cooperating members 36.

Figs 25 and 26 show the stage of tightening the chain 30 against the pipe 10. A turning member 140 is provided which comprises a handle 142 and a box spanner 144. The handle 140 is gripped by the user and the box spanner 144 lowered onto the nut 39 and by turning the nut 39 in a clockwise direction as shown by the arrow E in Fig 26, the member 32 is pulled upwardly and the chain 30 tightened against the pipe 10.

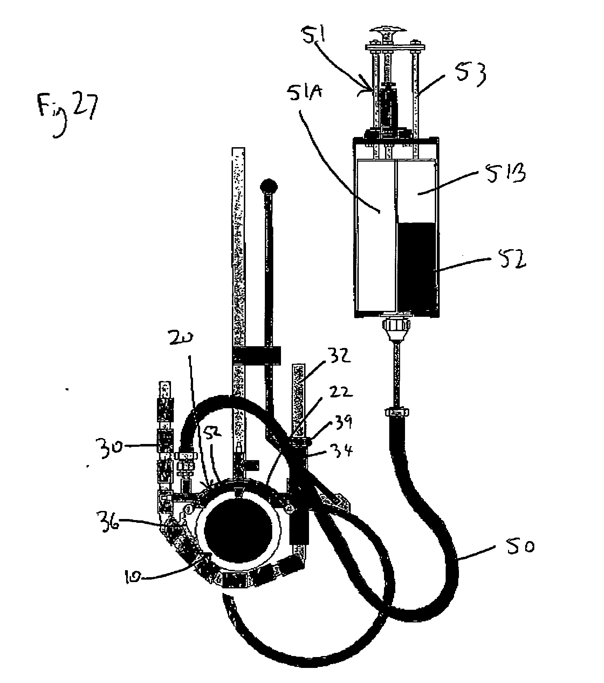

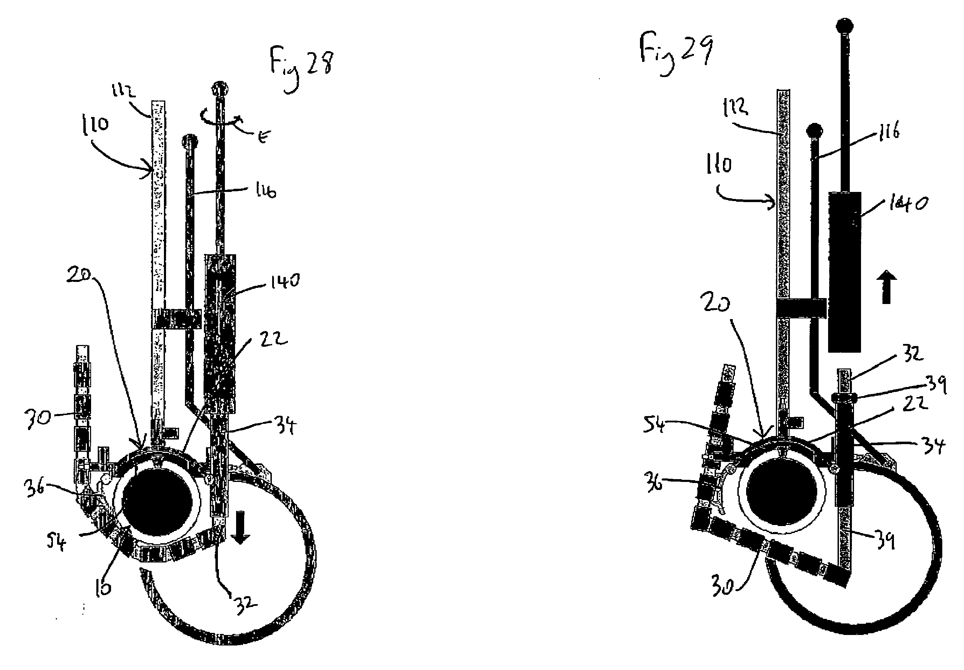

Fig 27 shows the attachment of the dispenser 51 to one of the conduits 26 in the same way as the first embodiment, the sealing material 52 is injected into the space 40, and allowed to cure to form a pad 54 of the sealing material. After the sealing material has cured, the turning member 140 is re-employed to loosen the nut 39, as shown in Fig 28, thereby also loosening the chain 30 on the pipe 10. When the chain 30 has been suitably loosened, the turning member 140 is removed, as shown in Fig 29.

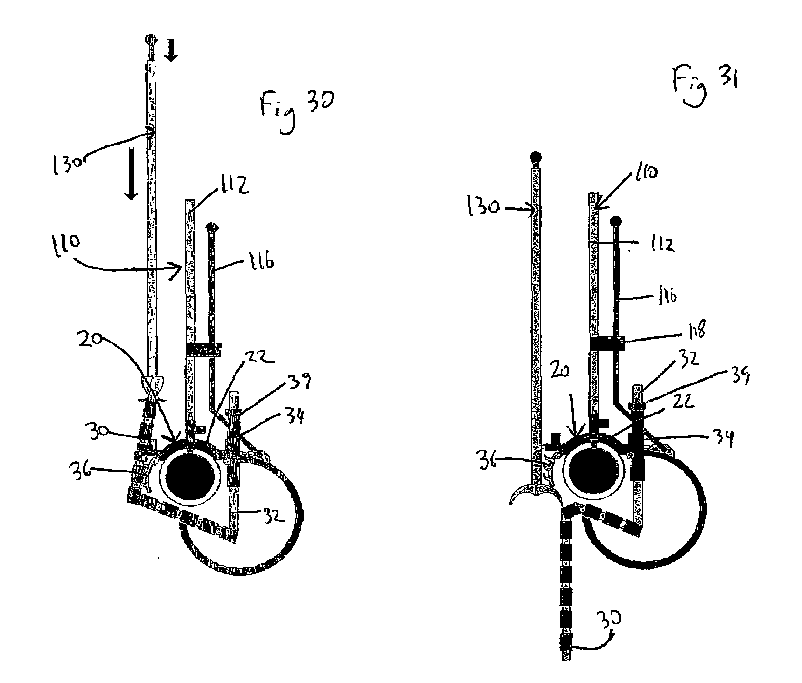

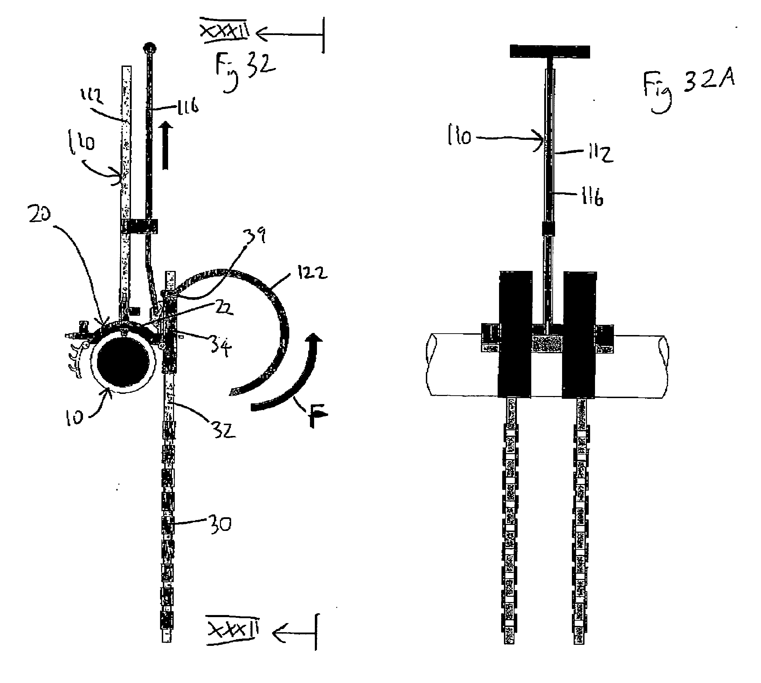

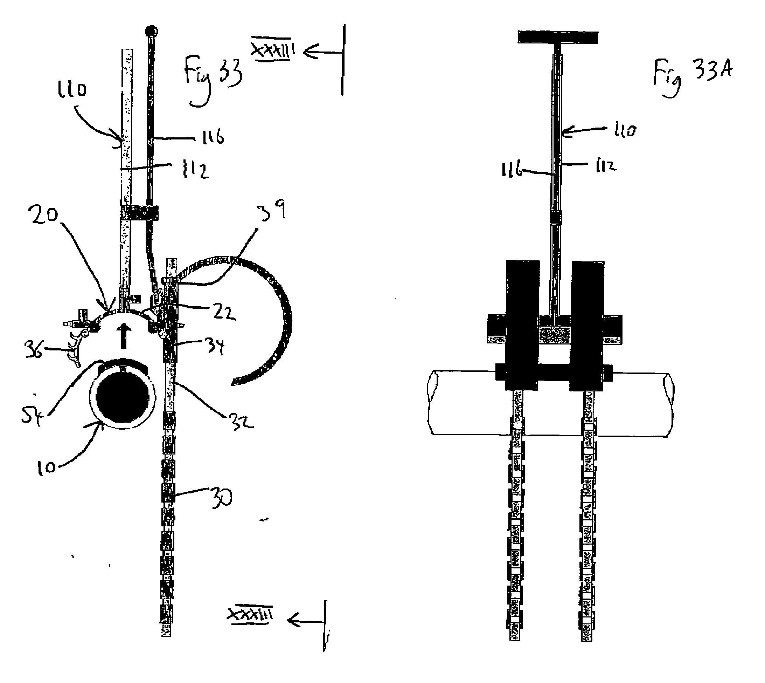

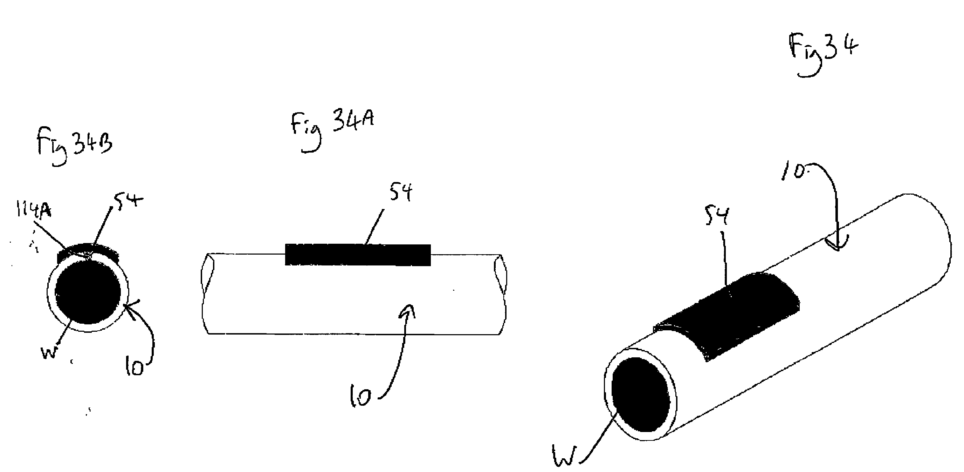

The grab member 130 is then employed to release the chain 30 from the cooperating member 36, as shown in Figs 30 and 31, and the handle 116 is moved upwardly as shown by the arrow F in Fig 32 to pivot the pivoting members 122 away from the pipe 10, as shown by the arrow F, thereby releasing the chain 30. The leak sealing arrangement 20 can then be removed from the pipe 10 by pulling the manipulating arrangement 110 away from the pipe 10, as shown in Figs 33 and 33A. Figs 34, 34A and 34B show the pipe 10 prepared by the sealing pad 54.

Referring to Fig 35, there is shown a further embodiment of a leak covering arrangement, generally designated 200. The leak covering arrangement 200 comprises a plate 222, which is curved to conform to the shape of the gas pipe 210. The intention is to seal a leak caused by a whole 212 in the gas pipe 210. A corroded region 214 surrounds the hole 212.

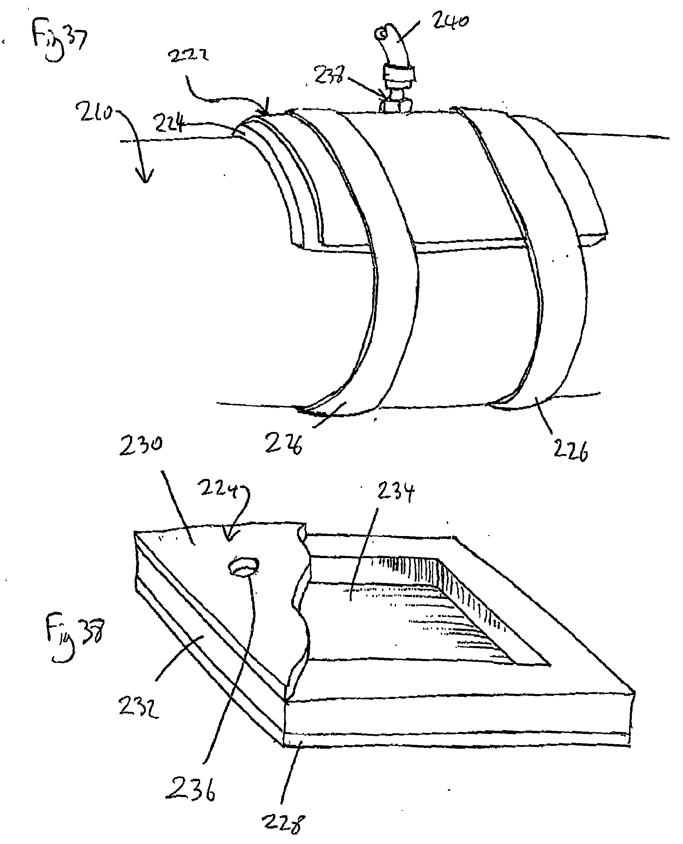

A holding member 224 is arranged over the corroded region 214 and the plate 222 is arranged over the holding member 224. Referring to Fig 37, steel straps 226, each incorporating a buckle, are then applied around the pipe 210 and used to secure the plate 222 and the holding member 224 to the pipe 210. The steel straps 226 are tightened at the buckles to secure the plate 222 and the holding member 224 firmly to the pipe 210.

The holding member 224 comprises an inner wall 228 which is arranged in engagement with the pipe 210, and an outer wall 230. A side wall 232 extends between the inner and outer walls 228, 230. The holding member 224 is of a generally square or rectangular construction. A cavity 234 is defined by the side wall 232 and between the inner and outer walls 230,228.

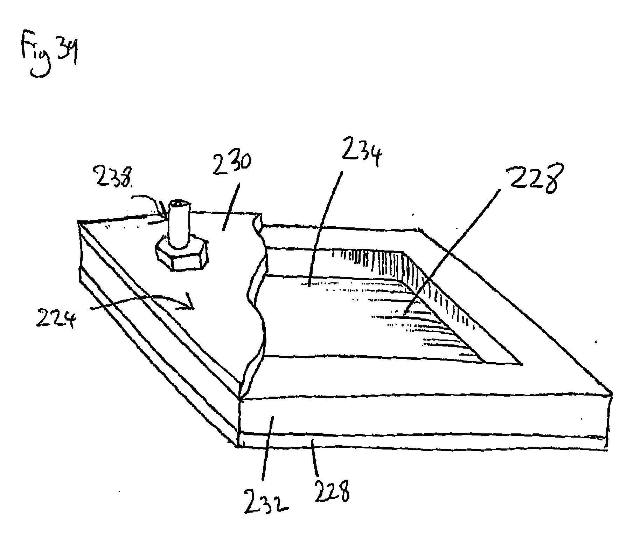

Referring to Fig 38 the outer wall 230 defines an inlet port formed of an inlet aperture 236 to allow a curable material to be injected into the cavity 234.

The plate 222 includes an injection nipple 238 to which a tube 230 can be secured from a suitable injector as would be understood by persons skilled in the art. The injection nipple 238 is arranged in alignment with the inlet aperture 236 to allow the curable material to be injected Into the cavity 234.

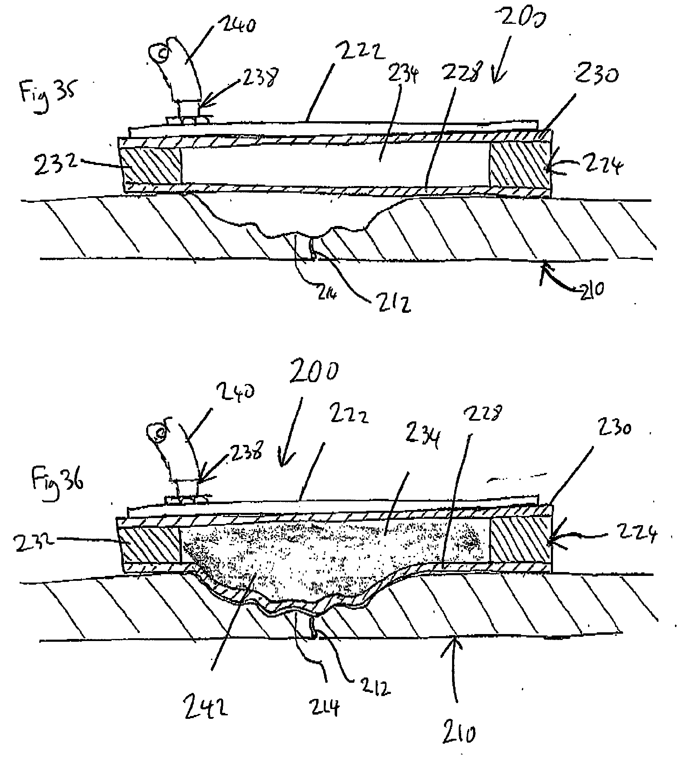

Referring to Figs 35 and 36, Fig 35 shows the arrangement of the leak covering arrangement 200 over the area to be repaired. The straps 226 used to secure the leak covering arrangement 200 to the pipe 226 are not shown in Figs 35 and 36 for clarity,

Fig 35 shows the condition of the leak covering arrangement prior to injection of a curable material into the cavity 234.

Fig 36 shows the condition of the leak covering arrangement 200 after injection of a curable material 242 into a cavity 234. As can be seen, the inner wall 228 has been deformed to conform to the corroded region 214. This provides a seal over the hole 212 and prevents the leakage of the gas in the pipe 210.

After the curable material 242 has cured, the pipe 240 is removed, and the leak covering apparatus 200 is left in place to seal the hole 212.

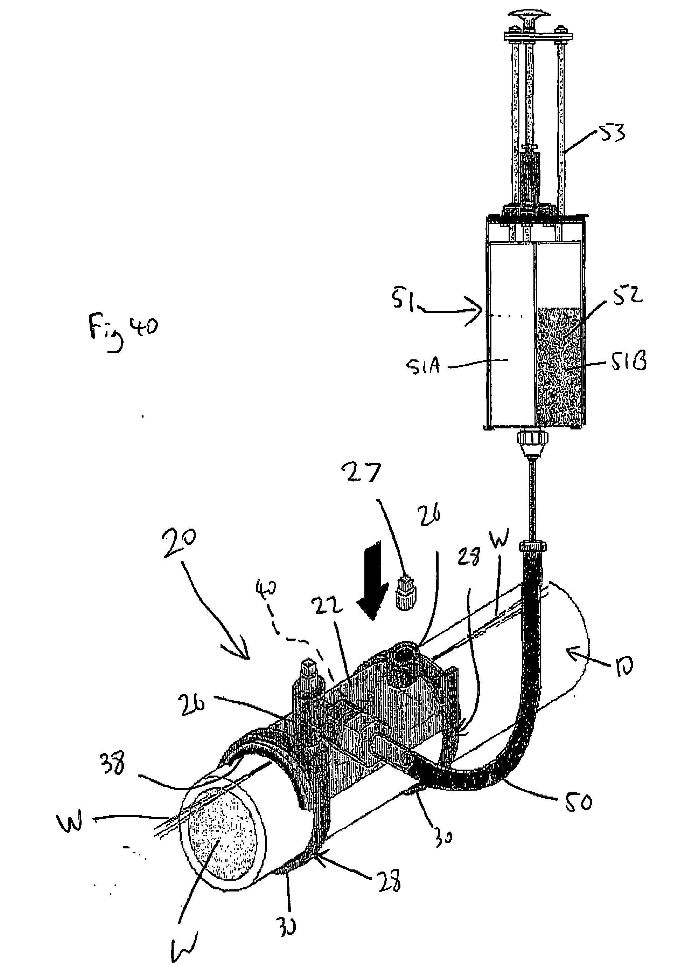

Fig 39 shows a further embodiment of a holding member 214. The difference between the embodiment shown in Fig 38 in which an injection nipple 238 is provided on the outer wall 230. In such a situation, the metal plate 222 is provided with an aperture to fit over the injection nipple 238 to allow it to be arranged against the outer wall 230. Alternatively, the outer wall 230 could be formed of a suitably rigid material to provide a reaction force to the curable material 242 to cause it to deform the inner wall 228.

Various modifications can be made without departing from the scope of the invention. For example, the plate could have any other number of conduits. Also, the plate could be of any suitable size and length and of any material. In some circumstances, for example when repairing a leak in a gas pipe, the stopper 14 or 114 is not used, and the leak is sealed with the use of the other features of the leak covering arrangement.

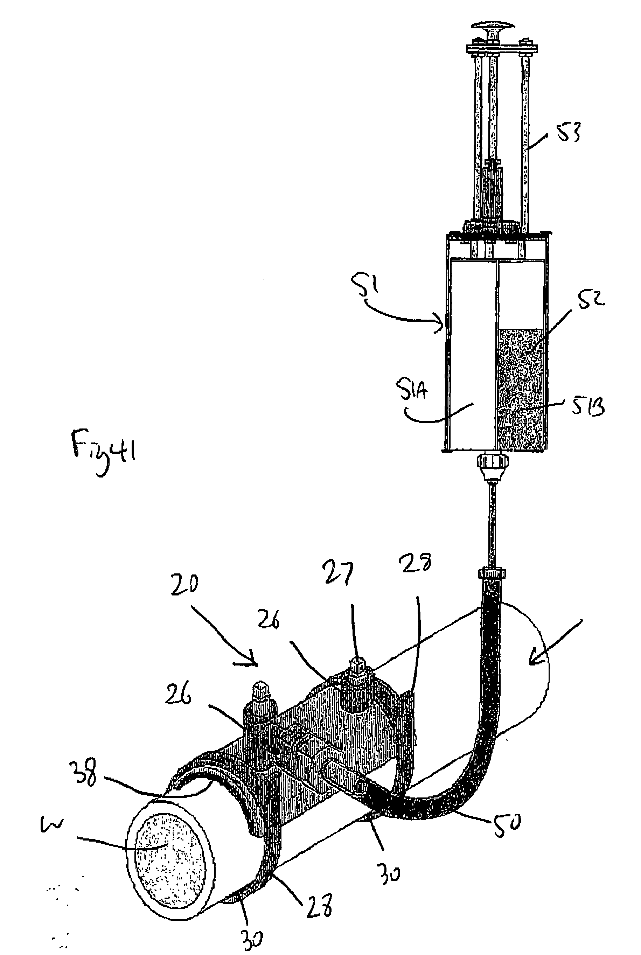

Referring to Figs 40 to 42, there is shown a further embodiment of a method of sealing a leak. The method is similar to that shown in Figs 6 to 15, the same features as in Figs 6 to 15 have been designated the same reference numerals in Figs 40 to 42. The embodiment shown in Figs 40 to 42 differs from that shown in Figs 6 to 15 in that there is no use of a stopper 14.

In the embodiment shown in Figs 40 to 42, the rectangular plate 22 has been arranged directly over the leak; without the use of the stopper 14. As can be seen, wall to wall gas W leaking out of the hole is ejected underneath the gasket 38 on the plate 22. The supply tube 50 is connected to one of the conduits 26, and the other is sealed with a sealing member 27.

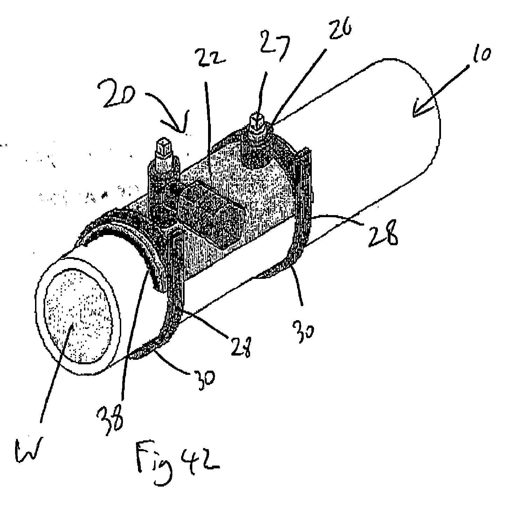

The dispenser 51 to the supply tube 50 is then operated to inject the curable material 52 into the space 40 defined by the plate 22, the gasket 38 and the pipe 10, until as shown in Fig 41, the leakage from underneath the gasket 38 is stopped, as shown in Fig 41.

Fig 42 shows the leak covering apparatus 10 or 20 after the dispenser 53 and the tube 50 have been removed. After the curable material has cured, the leak covering arrangement 20 can then be removed.

In an alternative embodiment, the gasket 38 could be replaced by a holding member 224, as shown in Figs 37 to 39, in which case the curable material deforms the inner wall 234 thereof to seal the leak, and the covering arrangement 20 shown in Fig 42 would remain in place to hold the holding member 224 on the pipe 10.

The holding member 224 as described above can be formed of a suitable deformable material, such as a rubber.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of sealing a leak in a fluid carrying member, the method comprising applying a leak covering arrangement to the fluid carrying member to cover the leak, so that the leak covering arrangement defines a space between the fluid carrying member and the leak covering member, securing the leak covering member to the fluid carrying member, supplying a curable material to the said space to seal the leak, and allowing the curable material to cure.

2. A method according to claim 1 wherein the method comprises removing the leak covering arrangement after the curable material has cured.

3. A method according to claim 1 or 2 wherein the leak covering arrangement includes a main portion and a flexible securing means, and the step of securing the leak covering arrangement to the fluid holding arrangement comprises tightening the flexible securing means against the fluid carrying member.

4. A method according to claim 3 wherein the main portion defines a supply aperture and a bleed aperture.

5. A method according to claim 4 wherein the main portion defines a plurality of apertures, each of which acts as a bleed aperture or as a supply aperture.

6. A method according to claim 4 or 5 wherein the main portion comprises a plurality of conduits extending to respective bleed or supply apertures, the conduits comprising closing means to close the conduits after the curable member has been injected into said space.

7. A method according to claim 6 wherein the conduits comprise connecting elements to connect the conduits to the supply or bleed tubes,

8. A method any of claims 3 to 7 wherein the main portion includes a gasket member to define the aforesaid space and to engage the fluid holding member to prevent leakage of the sealing material, the gasket comprising a rubber member extending around the edge region of the main portion.

9. A method according to any of claims 3 to 8 wherein the flexible securing means comprises a flexible securing member and tightening means to tighten the flexible securing member, the flexible securing member being fixedly attached to the tightening means at one region of the main portion, and the flexible securing member being manipulable to cooperate with a cooperating member at another region of the main portion, whereby the securing member extends around the fluid carrying member.

10. A method according to claim 9 wherein the tightening means comprises a threaded member to which the flexible securing member may be fixedly attached, and the tightening means further including a receiving element to receive the threaded member.

11. A method according to claim 10 wherein the receiving element is mounted on the main portion, and the tightening means includes a correspondingly threaded part to threadably engage the threaded member, the threaded part being configured to apply a reaction force against the receiving element to tighten the threaded member.

12. A method according to claim 9, 10 or 11 wherein the flexible securing member comprises a chain, and the cooperating member includes projecting portions onto which the flexible securing member can mesh.

13. A method according to any of claims 9 to 12 wherein the flexible securing member is fixedly attached to the tightening means at one side of the main portion, and the cooperating member is provided at the opposite side of the main portion.

14. A method according to any of claims 3 to 13 wherein the leak covering arrangement comprises two or more of the aforesaid securing means arranged side by side on the main portion.

15. A method according to any preceding claim wherein after the stage of securing the leak covering member to the fluid carrying member, the method comprises achieving a substantially equal pressure in the fluid carrying member and the space.

16. A method according to claim 1 or 3 wherein the leak covering arrangement comprises a holding member, which is arranged between the main portion of the leak covering arrangement and the fluid carrying member, the holding member defining the aforesaid space.

17. A method according to claim 16 wherein the holding member comprises an inner wall member to engage the fluid carrying member, the inner wall member being deformable to seal the leak.

18. A method according to claim 17 wherein the holding member includes a side wall on the inner wall, and a cavity is defined by the side wall and the inner wall,

19. A method according to claim 18 including an outer wall on the side wall.

20. A method according to any of claims 16 to 19 wherein an inlet port is provided to allow the curable material to be supplied to the cavity.

21. A method according to claim 20 wherein the inlet port is provided in the holding member.

22. A method according to claim 20 or 21 including supplying the curable material to the cavity via the inlet port to deform the inner wall thereby sealing the leak.

23. A leak covering arrangement to cover a leak in a fluid carrying member, the leak covering arrangement comprising a main portion to cover the leak and securing means to releasably secure the main portion to the fluid carrying member, wherein the securing means is arranged to allow the securing means to secure the main portion to different fluid carrying members.

24. A leak covering arrangement according to claim 23 wherein the leak covering arrangement includes a main portion and a flexible securing means, the flexible securing means comprising a flexible securing member and tightening means to tighten the flexible securing member, and the flexible securing member being fixedly attached to the tightening means at one region of the main portion.

25. A leak covering arrangement according to claim 24 wherein the flexible securing member is manipulable to cooperate with a cooperating member at another region of the main portion, whereby the securing member extends around the fluid carrying member.

26. A leak covering arrangement according to claim 24 or 25 wherein the tightening means comprises a threaded member to which the flexible securing member may be fixedly attached, and the tightening means further including a receiving element to receive the threaded member, the receiving element being mounted on the main portion.

27. A leak covering arrangement according to claim 26 wherein the tightening means includes a correspondingly threaded part to threadably engage the threaded member, the threaded part applying a reaction force against the receiving element to tighten the threaded member.

28. A leak covering arrangement according to any of claims 24 to 27 wherein the flexible securing member comprises a chain, and the cooperating member includes projecting portions onto which the flexible securing member can mesh.

29. A leak covering arrangement according to claim 28 wherein the flexible securing member is fixedly attached to the tightening means at one side of the main portion, and the cooperating member is provided at the opposite side of the main portion.

30. A leak covering arrangement according to any of claims 24 to 29 wherein the leak covering arrangement comprises two or more of the aforesaid securing means arranged side by side on the main portion.

31. A leak covering arrangement according to any of claims 23 to 30 wherein the main portion may define a supply aperture and a bleed aperture, the supply aperture and the bleed aperture being defined in the main portion.

32. A leak covering arrangement according to claims 23 to 31 wherein the main portion comprises a plurality of conduits extending to respective bleed or supply apertures, the conduits comprising closing means to close the conduits after the curable member has been said space, and the conduits comprising connecting elements to connect the conduits to the supply or bleed tubes.

33. A leak covering arrangement according to any of claims 23 to 32 wherein the main portion includes a gasket member to define the aforesaid space and to engage the fluid holding member to prevent leakage of the sealing material.

34. A leak covering arrangement according to claim 23 comprising a holding member arrangeable between the main portion and the fluid carrying member, the holding member defining a cavity for receipt of a curable material.

35. A leak covering arrangement according to claim 34 wherein the holding member comprises an inner wall member to engage the fluid carrying member, the inner wall member being deformable to seal a leak in the fluid carrying member.

36. A leak covering arrangement according to claim 35 wherein the holding member includes a side wall on the inner wall and the cavity is defined by the side wall and the inner wall.

37. A leak covering arrangement according to claim 36 including an outer wall on the side wall.

38. A leak covering arrangement according to any of claims 34 to 37 wherein an inlet port is provided to allow the curable material to be supplied to the cavity.

39. A leak covering arrangement according to claim 38 wherein the inlet port is in the holding member.
